# EUROPÄISCHE PATENTSCHRIFT

(11) **EP 1 574 004 B1**
(45) Veröffentlichungstag und Bekanntmachung des Hinweises auf die Patenterteilung: **19.03.2008**
(21) Anmeldenummer: 03773550.3
(22) Anmeldetag: 17.10.2003
(51) Int. Cl.: H04L 29/06, H04L 12/40

(54) **VERFAHREN ZUR ÜBERTRAGUNG VON DATEN AUF EINEM BUS**
METHOD FOR TRANSMITTING DATA ON A BUS
PROCEDE DE TRANSMISSION DE DONNEES SUR UN BUS

(30) Priorität: 18.10.2002 DE 10248672
(43) Veröffentlichungstag der Anmeldung: 14.09.2005
(73) Patentinhaber: ROBERT BOSCH GMBH, 70469 Stuttgart (DE)
(72) Erfinder: SCHUERMANS, Roel, 71665 Enzweihingen (DE); OSTGATHE, Tobias, 70839 Gerlingen (DE)
(86) Internationale Anmeldenummer: PCT/DE2003/003491
(87) Internationale Veröffentlichungsnummer: WO 2004/039030

(56) Entgegenhaltungen:
- EP-A- 1 085 423
- US-A- 6 131 809

## Beschreibung

Die vorliegende Erfindung betrifft ein Verfahren zur Übertragung von Datenblöcken von einer Datenquelle zu einer Datensenke auf einem Bus, der die Übertragung von Rahmen mit einer variablen, begrenzten Zahl von Datenelementen unterstützt. Wenn die Zahl der Datenelemente eines solchen Blocks größer ist als die maximal in einem Rahmen übertragbare Zahl von Datenelementen, so muss der Block auf mehrere Rahmen verteilt übertragen werden. Eine Datensenke, die diese Rahmen empfängt, muss den Block daraus wieder herstellen.

Eine korrekte Wiederherstellung des Blocks ist nicht möglich, wenn bei der Übertragung von der Datenquelle zur -senke Rahmen unbemerkt verloren gehen können, oder wenn ein Rahmen, der den letzten Rahmen bei der Übertragung des Blocks darstellt, nicht als solcher erkannt wird und weitere, später empfangene Rahmen von der Datensenke dem gleichen Block zugeordnet werden. Als Stand der Technik diesbezüglich gilt zum Beispiel die Druckschrift EP-A2-1085423.

Das Problem, dass umfangreiche Datenblöcke übertragen werden müssen, die nicht vollständig in einen Rahmen passen, stellt sich insbesondere bei der Entwicklung von auf dem CAN-Standard basierenden Daten verarbeitenden Systemen, z.B von Steuergeräten für die Kraftfahrzeugtechnik. Der CAN-Standard ist gut angepasst, um kleine Datenmengen innerhalb vorgegebener Zeitspannen von einem Sensor an ein Steuergerät bzw. von dem Steuergerät an einen Aktor zum Beeinflussen des Betriebszustandes eines Kraftfahrzeugmotors oder anderer Einheiten des Kraftfahrzeugs zu übertragen. Im Laufe der Entwicklung und Optimierung eines solchen Systems ist es jedoch häufig erforderliche, umfangreiche Datenmengen zwischen dem Steuergerät und einem Host-Rechner einer Entwicklungsumgebung zu übertragen, so dass ein Entwickler im Dialog mit den Host-Rechner die Arbeitsweise des Steuergeräts exakt und detailliert verfolgen kann.

Die Übertragung solcher Datenmengen über den CAN-Bus erfordert einen beträchtlichen Overhead und führt zu einer erheblichen Belastung der Übertragungskapazität des CAN-Busses. Wenn die Kommunikation des Steuergeräts mit dem Host-Rechner mit anderen auf dem Bus stattfindenden, für die vom Steuergerät zu realisierenden Steueraufgaben erforderlichen Kommunikationsprozessen um Übertragungskapazität konkurriert, kann es vorkommen, dass die Übertragungskapazität nicht für alle Aufgaben ausreichend, und die Funktionsfähigkeit des Gerätes kann beeinträchtigt sein.

### Vorteile der Erfindung

Durch die vorliegende Erfindung wird ein Verfahren zur Übertragung von Datenblöcken auf einem Bus zwischen einer Datenquelle und einer Datensenke geschaffen, das mit einem geringen Übertragungs-Overhead auskommt und so die auf dem Bus zur Verfügung stehende Bandbreite effizent nutzt. Das Verfahren geht davon aus, das es die Datensenke ist, die das Format, insbesondere die Anzahl der Datenelemente, eines Datenblockes spezifiziert, den sie von einer Quelle zu empfangen erwartet. Diese Elementzahl kann größer sein als die Zahl der in einem einzelnen von dem Bussystem unterstützten Rahmen übertragbaren Datenelemente. Wenn dies der Fall ist, müssen die Datenelemente eines Blocks auf mehrere Rahmen verteilt und die Rahmen auf dem Bus zur Senke übertragen werden. Wenn N die Zahl der Datenelemente eines zu übertragenden Blocks ist, und n die Zahl der Datenelemente ist, die maximal in einem Rahmen übertragbar sind, so füllt der Block int (N/n) Rahmen vollständig, wobei int(N/n) die größte ganze Zahl ist, die kleiner oder gleich N/n ist. Wenn diese vollständig gefüllten Rahmen übertragen worden sind, wird anschließend noch ein Rahmen übertragen, der (N mod n) Datenelemente enthält. Die Zahl der Datenelemente dieses letzten Rahmens kann also auch Null sein, wenn N durch n ohne Rest teilbar ist. Aus der Tatsache, dass ein Rahmen mit weniger als der höchstmöglichen Zahl n von Datenelementen empfangen wurde, kann die Datensenke den Schluss ziehen, das es sich um den letzten Rahmen eines Blocks handelt. Ein Vergleich der tatsächlich empfangenen Zahl von Datenelementen mit der erwarteten Zahl N erlaubt auf Seiten der Datensenke eine Beurteilung, ob der Block vollständig empfangen wurde.

Wenn die Zahl der Datenelemente N eines zu übertragenden Blocks kleiner als die Zahl n der maximal in einem Rahmen übertragbaren Datenelemente ist, so ist das oben beschriebene Verfahren im Prinzip unverändert anwendbar: In diesem Fall ist int(N/n) = 0, es wird also nur ein einziger Rahmen mit den N Datenelementen übertragen, der von der Datensenke auch unmittelbar als letzter Rahmen des Blocks erkannt wird.

Eine vorteilhafte Sonderregelung ist möglich, wenn die Zahl der Datenelemente des Blocks N mit der maximalen Zahl der Datenelemente des Rahmens n über-einstimmt. Da die Datensenke die Zahl der zu übertragenden Datenelemente des Blocks spezifiziert hat und diese kennt, wenn sie den Block empfängt, ist sie bereits unmittelbar nach vollständigem Empfangen eines Rahmens in der Lage, zu erkennen, das der darin enthaltene Block vollständig eingetroffen ist. Da keine weiteren Rahmen zu übertragen sind, die möglicherweise verloren gehen oder in anderer Weise fehlerhaft übertragen werden könnten, ist es in diesem Fall nicht erforderlich, einen Rahmen ohne Datenelemente zu übertragen, um der Senke die vollständige Übertragung des Blocks anzuzeigen.

Zweckmäßigerweise spezifiziert von der Datensenke an die -quelle übertragene Steuerinformation nicht nur die Zahl der Elemente eines zu übertragenden Blocks, sondern auch den Zeitpunkt (bzw., im Fall von periodischer Übertragung, die Zeitpunkte) sowie die Art und Bedeutung der zu übertragenden Parameter.

Weitere Merkmale und Vorteile der Erfindung werden deutlich aus der nachfolgenden Beschreibung von Ausführungsbeispielen mit Bezug auf die beigefügte Zeichnung.

### Figuren

Es zeigen:
- Fig. 1: ein Blockdiagramm eines exemplarischen Datenverarbeitungssystems, in dem das erfindungsgemäße Verfahren anwendbar ist:
- Fig. 2: die Struktur eines CAN-Rahmens;
- Fig. 3: ein Flussdiagramm einer vom Steuergerät aus Fig. 1 im Rahmen des erfindungsgemäßen Verfahrens durchgeführten Verarbeitung;
- Fig. 4: ein Flussdiagramm einer vom Hostrechner durchgeführten Verarbeitung.

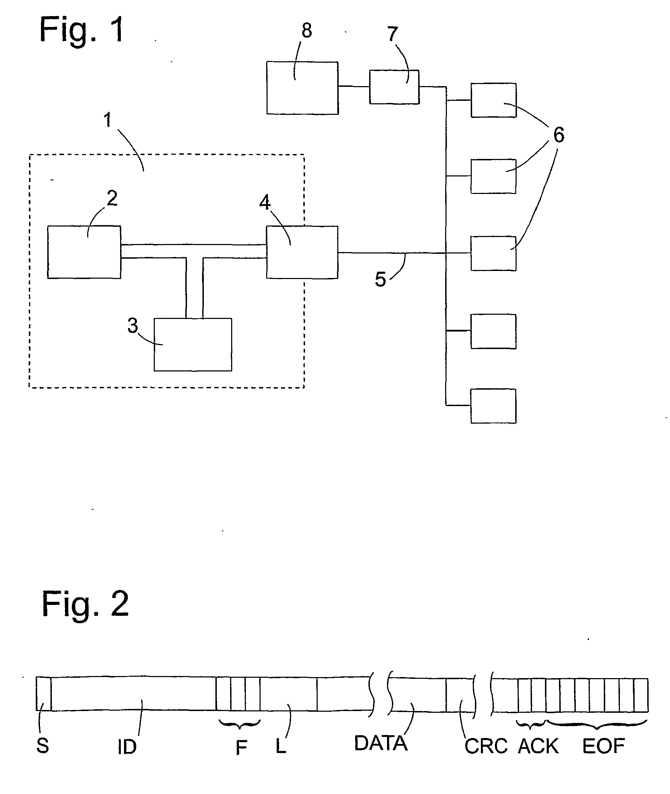

Das Blockdiagramm der Fig. 1 zeigt als Beispiel für ein erfindungsgemäßes Datenverarbeitungssystem eine Entwicklungsumgebung für einen Controller, insbesondere ein Kraftfahrzeug-Steuergerät. Dieses Steuergerät 1 umfasst einen Mikroprozessor 2, einen Speicherbaustein 3 und eine Schnittstelle 4 zu einem Bus, insbesondere einem CAN-Bus 5, an dem eine Mehrzahl von Funktionseinheiten 6 des Kraftfahrzeugs angeschlossen sind, welche Messwerte von Betriebsparametern des Fahrzeugs über den Bus 5 an das Steuergerät 1 liefern und/oder Befehle vom Steuergerät 1 empfangen und ausführen. Bei den Funktionseinheiten kann es sich z.B. um Drehwinkelaufnehmer an einer Kurbelwelle des Fahrzeugsmotors, die einen Messwert für den Drehwinkel der Kurbelwelle an das Steuergerät 1 liefern, oder um Zündkerzen des Motors handeln, die einen vom Steuergerät 1 aus den Messwerten der Drehwinkel aufnehmbaren abgeleiteten Zündbefehl empfangen. Die Funktionseinheiten können noch diverse andere Mess- und Reglungsaufgaben erfüllen, die hier nicht im Detail beschrieben werden.

Während sich das Steuergerät 1 noch in der Phase der Erprobung und Entwicklung befindet, ist an den CAN-Bus 5 eine Schnittstelle 7 angeschlossen, über die ein Hostrechner 8 der Entwicklungsumgebung mit dem Steuergerät 1 kommunizieren kann.

Mit Hilfe dieses Host-Rechners 8 ist es z.B. möglich, Daten, die das Steuergerät 1 von den diversen Funktionseinheiten 6 gesammelt und in dem Speicherbaustein 3 abgelegt hat, auszulesen und einem Entwickler anzuzeigen, der so in der Lage ist, die Arbeitsweise des Mikroprozessors 2 zu beurteilen und eventuelle Fehler der Arbeitsweise durch Änderungen am Steuerprogramm des Mikroprozessors 2 zu beheben.

Bei der Kommunikation des Mikroprozessors 2 mit den Funktionseinheiten 6 werden im Allgemeinen kleine Datenmengen unter strikten zeitlichen Anforderungen übertragen. D.h. wenn eine der Funktionseinheiten 6 einen Parameterwert geliefert hat, muss das Steuergerät 1 in vorgegebener, kurzer Zeit darauf reagieren, und es ist nicht möglich, z. B. mehrere Messwerte der Funktionseinheit zu sammeln und diese mehreren Messwerte als eine Einheit mit einem Satz an Overhead-Information zu übertragen, um die Effektivität der Übertragung zu verbessern. Aus diesem Grund verwendet das CAN-Busprotokoll vergleichsweise kurze Rahmen mit maximal 8 Byte Nutzdateninhalt, bei denen der Overhead-Anteil an der insgesamt übertragenen Datenmenge recht hoch ist, die aber dafür eine Datenübertragung mit kurzen Verzögerungen ermöglichen.

Zur Verdeutlichung ist in Fig. 2 die Struktur eines CAN-Rahmens detailliert dargestellt. Ein einzelnes Startbit S kennzeichnet den Beginn des Rahmens. Auf dieses folgt ein 11 Bit breites Feld ID, das eine eindeutige Bezeichnung desjenigen an den CAN-Bus 5 angeschlossenen Gerätes (einer der Funktionseinheiten 6, des Steuergerätes 1 oder eines einzelnen auf diesem ablaufenden Prozesses, oder des Host-Rechners 8 bzw. eines auf diesem ablaufenden Prozesses) enthält, für den die Nutzdaten des betreffenden CAN-Rahmens bestimmt sind.

Es schließen sich 3 Statusflags F an, die Eigenschaften des CAN-Rahmens spezifizieren, die für die vorliegende Erfindung nicht von Bedeutung sind und nicht weiter erläutert werden.

Ein darauf folgendes 4 Bit breites Feld L spezifiziert die Zahl der in dem CAN-Rahmen enthaltenen Nutzdatenbytes. Diese Zahl kann zwischen 0 und 8 Bytes liegen.

Die Länge des sich anschließenden Abschnitts DATA entspricht der im Feld L angegebenen Bytezahl.

Ein 16 Bit breites Prüfsummenfeld CRC erlaubt in herkömmlicher Weise die Erkennung und Behebung von in den davor liegenden Feldern aufgetretenen Übertragungsfehlern. Es folgen zwei Bestätigungsbits ACK und ein 7 Bit breites Feld ELF mit einem das Ende des Rahmens anzeigenden Bitmuster. Bis zum Beginn des darauf folgenden Rahmens können 1-3 Bits eingefügt sein, die keine Information übertragen.

Während das CAN-Protokoll an die Übertragung kleiner Datenmengen mit kurzen Reaktionszeiten gut angepasst ist, ergeben sich Probleme, wenn große, zusammenhängende Datenmengen übertragen werden müssen, die nicht in einen einzelnen CAN-Rahmen passen. Diese müssen jeweils auf Seiten der Datenquelle, die sie auf dem Bus 5 sendet, auf mehrere Rahmen verteilt werden und auf Seiten der sie empfangenden Senke wieder vollständig und in der richtigen Reihenfolge zusammengefügt werden. Dies kann insbesondere dann scheitern, wenn infolge eines Fehlers bei der Übertragung des Identifikatorabschnitts ID die Datensenke einen an sich für sie bestimmten Rahmen nicht als solchen erkennt und ignoriert, wenn sie aus dem gleichen Grunde einen Rahmen fälschlich als für sie bestimmt auffasst, wenn beim Empfangen des Längenfeldes L ein Fehler auftritt, Nutzdaten falsch übermittelt werden oder dergleichen. Um dies zu vermeiden oder solche Fehler zumindest erkennen und abfangen zu können, wird bei herkömmlichen Systemen eines der 8 Nutzdatenbytes jedes Rahmens herangezogen, um eine laufende Nummer zu übertragen, die es der Datensenke ermöglicht, Lücken in der Folge der von ihr empfangenen Rahmen oder fälschlicherweise ihr zugeordnete Rahmen zu erkennen. Die Übertragung einer solchen laufenden Nummer erhöht zusätzlich den Overhead-Anteil des Rahmens und vermindert die Effektivität der Datenübertragung.

Um diesem Übel zu begegnen, nutzt die Erfindung die Tatsache, das bei vielen Übertragungsaufgaben der Datensenke der Umfang des zu übertragenden Datensatzes vorab bekannt ist. Dies ist insbesondere in einem Datenverarbeitungssystem wie in dem der Fig. 1 der Fall, wenn Messdaten oder andere Betriebsparameter des Steuergeräts 1 an den Hostrechner 8 übertragen werden. Dies geschieht im Allgemeinen auf vorherige Veranlassung des Hostrechners 8, der somit "weiß", welches die von dem Steuergerät 1 zu übertragenden Daten sind und welchen Umfang diese haben. Wenn der Hostrechner einen Hinweis vom Steuergerät empfangen hat, dass letzteres die Übertragung eines Datenblocks als beendet ansieht, genügt es daher, den Umfang der tatsächlich in dem Block empfangenen Daten mit dem vorbekannten Umfang zu vergleichen, um festzustellen, ob Übertragungsfehler aufgetreten sind, und bei Übereinstimmung der empfangenen Datenmengen mit der erwarteten die Übertragung als erfolgreich anzuerkennen.

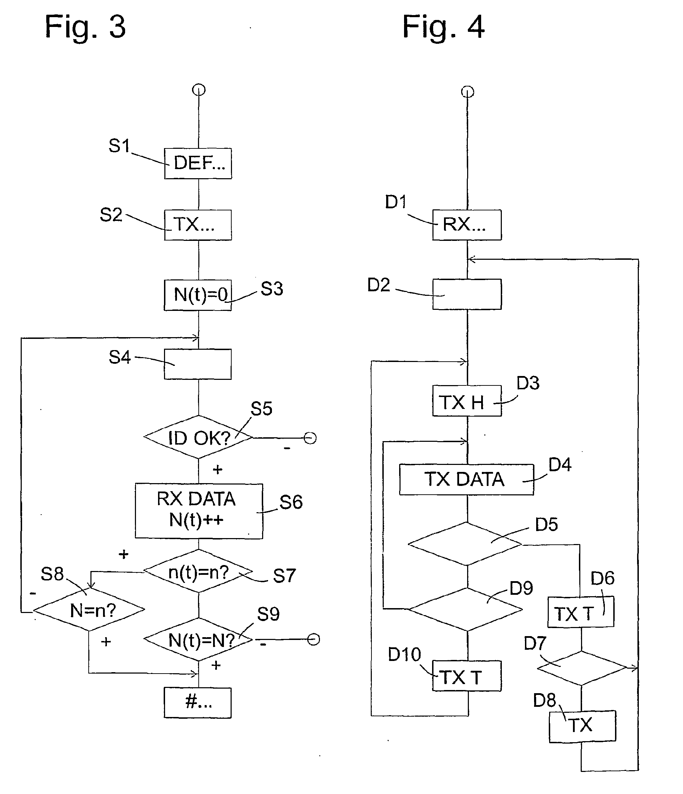

Ein Arbeitsverfahren des Steuergeräts 1 und des Hostrechners 8, die nach dem oben erläuterten Prinzip zusammenwirken, wird im Bezug auf die Flussdiagramme der Fig. 3 und 4 beschrieben.

Fig. 3 zeigt die Arbeitsweise der Datensenke, im hier betrachteten Beispiel also des Hostrechners 8, und Fig. 4 die der Datenquelle, d.h des Steuergeräts 1.

In Schritt S1 definiert ein Entwickler im Dialog mit dem Hostrechner 8 die Struktur eines Datenblocks, der aus dem Steuergerät 1 in den Hostrechner 8 übertragen werden soll. Die Definition dieser Struktur umfasst im einzelnen die Festlegung eines Werts des Identifikators ID, der später die Zuordnung der übertragenen Rahmen zu demjenigen auf dem Hostrechner laufenden Prozess ermöglicht, der diese benötigt. Weiterhin werden die zu übertragenden Parameter festgelegt, d.h. es wird eine Liste der Register oder Speicherplätze des Speicherbausteins 3 des Steuergeräts 1 festgelegt, deren Inhalt zum Hostrechner 8 übertragen werden soll, und die Reihenfolge, in der diese Parameter übertragen werden sollen. Schließlich wird noch ein Zeitpunkt festgelegt, an welchem das Lesen der betreffenden Speicherplätze stattfinden soll. Der Zeitpunkt kann ein einzelner, absolut festgelegter Zeitpunkt sein, er kann definiert sein durch ein bestimmtes zeitliches Verhältnis zum Eintreten einer externen Bedingung, z.B. mit einer spezifizierten Verzögerung nach Auslösung eines bestimmten Interrupts), oder es kann eine periodische Übertragung mit spezifizierter Periode vorgesehen werden.

Im Schritt S2 wird die so festgelegte Steuerinformation an das Steuergerät 1 übertragen. Der Einfachheit halber soll angenommen werden, dass der Umfang der zu übertragenden Steuerinformation 8 Byte nicht überschreitet, so dass die Steuerinformation in einem einzelnen herkömmlichen CAN-Rahmen übertragen werden kann. Wenn die zu übertragende Steuerinformation mehr als 8 Bytes umfasst, kann das im Folgenden für die Übertragung eines Datenblocks von der Datenquelle zur -senke beschriebene Verfahren auch für die Übertragung der Steuerinformation von der Datensenke an die -quelle eingesetzt werden.

Die Steuerinformation wird von der Datenquelle, hier dem Steuergerät 1, empfangen (Schritt D1 in Fig. 4). Während dessen bereitet sich die Datensenke auf den Empfang eines ersten Blocks von Daten vor, in dem sie einen Zähler N(t) auf 0 setzt (Schritt S3). Anschließend geht sie in einen Wartezustand S4 über, in welchem sie auf das Eintreffen eines Rahmens über den CAN-Bus 5 wartet.

Parallel dazu wartet die Datenquelle auf den in der Steuerinformation spezifizierten Zeitpunkt zum Lesen der Register (D2). Zum angegebenen Zeitpunkt beginnt sie mit dem Lesen der Register und sendet den Kopfabschnitt H eines CAN-Rahmens, also die in Fig. 2 mit S bis L bezeichneten Abschnitte, an den Hostrechner 8. Dieser überprüft in Schritt S5 den im Kopfabschnitt H übertragenen Identifikator ID, ob er mit dem erwarteten übereinstimmt. Wenn keine Übereinstimmung vorliegt, kehrt der Hostrechner 8 entweder in den Wartezustand S4 zurück oder er verzweigt zu einem anderen Verarbeitungsprozess, wenn der Identifikator ID einem anderen, ebenfalls von ihm ausgeführten Prozess entspricht.

Während dessen sendet das Steuergerät in Schritt D4 ein Datenbyte des Rahmens. Anschließend (D5) überprüft das Steuergerät, ob gemäß der Definition des Blocks noch zu sendende Datenbytes übrig sind. Ist dies nicht der Fall, so wird in Schritt D6 der Schwanzabschnitt (Trailer) des CAN-Rahmens, d.h. vom CRC-Abschnitt bis zum EOF-Abschnitt, gesendet (D6). Dann wird in Schritt D7 geprüft, ob die Bytezahl N des Blocks von n verschieden oder ohne Rest durch n teilbar ist. Ist eine dieser Bedingungen erfüllt, so wird in Schritt D8 noch ein Rahmen ohne Nutzdaten gesendet, bevor das Verfahren, sofern es sich nicht um einen nur einmal zu sendenden Block handelt, zu Schritt D2 zurückkehrt. Andernfalls endet das Verfahren unmittelbar oder kehrt unmittelbar, ohne Senden eines Leerrahmens, zu D2 zurück.

Ergibt die Überprüfung in Schritt D5, dass noch Datenbytes zu senden sind, geht das Verfahren weiter zu Schritt D9, in welchem überprüft wird, ob in dem in Übertragung befindlichen Rahmen noch ein weiteres Byte übertragen werden darf. Wenn ja, kehrt das Verfahren zu Schritt D4 zurück, um das Byte zu senden, wenn nein, wird in Schritt D10 der Schwanzabschnitt gesendet, und das Verfahren kehrt zu Schritt D3 zurück, um mit der Übertragung des Kopfabschnitts eines weiteren Rahmen zu beginnen.

Wenn der Host-Rechner 8 in Schritt S5 den Identifikator des Rahmens für korrekt befunden hat, empfängt er in Schritt S6 ein Datenbyte und inkrementiert den Zähler N(t) der empfangenen Bytes. Anschließend vergleicht er in Schritt S7 die im Längenfeld L des Kopfabschnitts H angegebene Zahl n(t) von in diesem Rahmen enthaltenen Nutzdatenbytes mit der maximal zulässigen Zahl von Nutzdatenbytes n=8. Wenn beide Werte übereinstimmen, verzweigt das Verfahren zu Schritt S8, in welchem der Hostrechner die Gesamtzahl der in dem zu übertragenden Block enthaltenen Datenbytes N, die ihm aus dem Schritt S1 des Definierens des Blocks bekannt ist, mit der maximal zulässigen Bytezahl n eines Rahmens vergleicht. Wenn beide nicht übereinstimmen, so bedeutet dies, das die Übertragung weiterer CAN-Rahmen zu erwarten ist, die weitere Bytes des gleichen Blocks befördern, und das Verfahren kehrt zurück zum Wartezustand des Schritts S4. Wird in Schritt S7 jedoch Gleichheit festgestellt, so bedeutet dies das der Block insgesamt nur ≤ 8 Datenbytes enthält, und dass seine Übertragung somit vollständig ist. In diesem Fall geht das Verfahren über zur Verarbeitung der empfangenen Datenbytes in Schritt S9.

Wenn der Hostrechner 8 in Schritt S7 feststellt, das die im aktuellen Rahmen übertragene Bitzahl n(t) die maximal zulässige Bitzahl n ist, so bedeutet dies, dass es sich um den letzten Rahmen eines Blocks handelt. Der Hostrechner 8 vergleicht daraufhin (S9) die Zahl N(t) der bislang empfangenen Datenbytes dieses Blocks mit der Bytezahl N gemäß der in Schritt 1 getroffenen Definition. Bei Ungleichheit muss ein Fehler stattgefunden haben, und das Verfahren verzweigt zu einer Fehlerbehandlungsroutine, in der z.B. der gesamte Block verworfen oder eine Neuübertragung des Blocks angefordert werden kann. Bei Übereinstimmung wird der Block als korrekt empfangen angesehen und in Schritt S9 verarbeitet.

Anschließend kehrt das Verfahren zu Schritt S3 zurück, um den Bytezähler N(t) erneut auf 0 zu setzen und auf die Übertragung eines weiteren Datenblocks zu warten.

Mit dem vorliegenden Verfahren wird erreicht, das auch bei der Übertragung von zusammenhängenden Nutzdatenblöcken, die mehr Nutzdatenbits umfassen, als ein CAN-Rahmen aufzunehmen vermag, die gesamte Übertragungskapazität des CAN-Rahmens zur Übertragung dieser Nutzdaten zur Verfügung steht und keine zusätzliche Nutzdaten-Übertragungskapazität für die Übertragung von Steuerinformationen abgestellt werden muss. Das Verfahren ist mit den bestehenden, die Datenübertragung auf dem CAN-Bus betreffenden Normen kompatibel.

## Patentansprüche

1. Verfahren zur Übertragung von Datenblöcken von einer Datenquelle (1) zu einer Datensenke (8) auf einem Bus (5), der die Übertragung von Rahmen mit einer variablen, begrenzten Anzahl n von Datenelementen unterstützt, **gekennzeichnet durch** die Schritte:
a) Senden (S2) einer Steuerinformation, die wenigstens die Zahl N der in einem zu übertragenden Block enthaltenen Datenelemente spezifiziert, von der Datensenke (8) an die Datenquelle (1);
b) Wenn N>n ist, Senden (D4) von I Rahmen, mit je n Datenelementen des zu übertragenden Blocks und eines Rahmens mit M Datenelementen des zu übertragenden Blocks von der Datenquelle (1) an die Datensenke (8), wobei I = int N/n und somit die größte ganze Zahl ist, die kleiner oder gleich N/n ist und M = N mod n ist;
c) Erkennen der Übertragung eines Blocks als vollständig (S9) **durch** die Datensenke(8), wenn die Zahl Z der in Schritt b) empfangenen Datenelemente mit der in der Steuerinformation spezifizierten Zahl N übereinstimmt.

2. Verfahren nach Anspruch 1, **dadurch gekennzeichnet, dass** wenn N ≤n ist, die Datenquelle (1) einen einzigen Rahmen mit N Datenelementen sendet und die Datensenke (8) den Block bereits nach Empfang des einzigen Rahmens als vollständig erkennt (S8).

3. Verfahren nach Anspruch 1 oder 2, **dadurch gekennzeichnet, dass** die Datenquelle (1) den Block zu einem Zeitpunkt sendet, der in der Steuerinformation spezifiziert ist.

4. Verfahren nach einem der vorhergehenden Ansprüche, **dadurch gekennzeichnet, dass** die Datenquelle (1) den Block aus einer Mehrzahl von in der Steuerinformation spezifizierten Parametern zusammenstellt.

5. Verfahren nach einem der vorhergehenden Ansprüche, **dadurch gekennzeichnet, dass** der Bus ein CAN-Bus ist.

6. Verfahren nach einem der vorhergehenden Ansprüche, **dadurch gekennzeichnet, dass** es in einer Entwicklungsumgebung für eine Controllerschaltung angewendet wird, wobei die Datenquelle (1) die Controllerschaltung ist und die Datensenke (8) ein Host-Rechner ist.

## Claims

1. Method for transmitting data blocks from a data source (1) to a data sink (8) on a bus (5) which supports the transmission of frames with a variable, limited number n of data elements, **characterized by** the following steps:
a) an item of control information which specifies at least the number N of data elements contained in a block to be transmitted is sent (S2) from the data sink (8) to the data source (1) ;
b) if N>n, I frames with n respective data elements of the block to be transmitted and one frame with M data elements of the block to be transmitted are sent (D4) from the data source (1) to the data sink (8), I = int N/n and thus being the largest whole number which is less than or equal to N/n, and M = N mod n;
c) the data sink (8) identifies the transmission of a block as being complete (S9) if the number Z of data elements received in step b) corresponds to the number N specified in the control information.

2. Method according to Claim 1, **characterized in that**, if N ≤ n, the data source (1) sends a single frame with N data elements and the data sink (8) identifies the block as being complete (S8) as early as after receiving the single frame.

3. Method according to Claim 1 or 2, **characterized in that** the data source (1) sends the block at a point in time which is specified in the control information.

4. Method according to one of the preceding claims, **characterized in that** the data source (1) compiles the block from a plurality of parameters specified in the control information.

5. Method according to one of the preceding claims, **characterized in that** the bus is a CAN bus.

6. Method according to one of the preceding claims, **characterized in that** it is used in a development environment for a controller circuit, the data source (1) being the controller circuit and the data sink (8) being a host computer.

## Revendications

1. Procédé de transmission de blocs de données d'une source de données vers un puits de données (8) par un bus (5) qui soutient la transmission de trames ayant un nombre variable (n), limité d'éléments de données,
**caractérisé par** les étapes suivantes :
a) émission (S2) d'une information de commande qui spécifie au moins le nombre N d'éléments de données contenus dans un bloc à transmettre, du puits de données (8) vers la source de données (1),
b) si N>n, envoi (D4) de I trames ayant chacune (n) éléments de données du bloc à transmettre et d'une trame à M éléments de données du bloc à transmettre de la source de données (1) vers le puits de données (8), 1 = int N/n et ainsi le plus grand nombre qui est inférieur ou égal à N/n et M = N (mod n) ,
c) reconnaissance de la transmission d'un bloc comme étant complet (S9) par le puits de données (8) si le nombre Z des éléments de données reçus dans l'étape b) correspond au nombre N spécifié dans l'information de commande.

2. Procédé selon la revendication 1,
**caractérisé en ce que**
si N ≤ n, la source de données (1) envoie une unique trame à N éléments de données et le puits de données (8) reconnaît (S8) le bloc dès la réception de l'unique trame comme étant complet.

3. Procédé selon la revendication 1 ou 2,
**caractérisé en ce que**
la source de données (1) envoie le bloc à un instant spécifié dans l'information de commande.

4. Procédé selon l'une des revendications précédentes,
**caractérisé en ce que**
la source de données (1) compose le bloc de plusieurs paramètres spécifiés dans l'information de commande.

5. Procédé selon l'une des revendications précédentes,
**caractérisé en ce que**
le bus est un bus CAN.

6. Procédé selon l'une des revendications précédentes,
**caractérisé en ce qu'**
il est utilisé dans un environnement de développement d'un circuit de contrôleur, la source de données (1) étant le circuit de contrôleur et le puits de données (8) étant un calculateur hôte.
